# EUROPEAN PATENT APPLICATION

(11) **EP 4 369 032 A1**
(43) Date of publication of application: **15.05.2024**
(21) Application number: 22206316.6
(22) Date of filing: 09.11.2022
(51) Int. Cl.: G01S 7/4863, G01S 7/487, G06N 3/049, G06V 20/40, H04N 25/75, G06V 10/44

(54) **OPTICAL SENSING SYSTEM**

(71) Applicant: VoxelSensors SRL, 1190 Forest (BE)
(72) Inventor: Van Der Tempel, Ward, 3140 Keerbergen (BE); Mourad, Christian, 1332 Genval (BE)

(57) **Abstract**

The present invention relates to an optical sensing system (1) for optical sensing. The system (1) comprises at least one optical sensor (30) comprising a plurality of sensing units (2'), preferably in a matrix configuration, wherein each of said sensing units (2') is preferably a pixel sensor (2'), wherein each sensing unit comprising a photo detector, wherein each photo detector is adapted to output a signal upon detection of a photon. The system (1) further comprises optics (3) able to produce an image of a scene (4) on said optical sensor (30). The system (2) further comprises a plurality of processing means (5'), wherein each of said processing means (5') is connected to at least one sensing unit (2') corresponding thereto. Each of said processing means (5') is adapted to receive at least one input corresponding to at least one output (7') of the corresponding sensing unit (2'). Each of said processing means (5') is adapted to integrate the output (7', 7", 7‴) of the corresponding sensing unit (2', 2", 2‴) to obtain a first integrated output (10), wherein said processing means is adapted to produce a first output signal (8) when the first integrated output (10) reaches at least a first predetermined value (9) within a first predetermined time span (Δt).

## Description

### TECHNICAL FIELD

The present invention relates to an optical sensing system. In particular, the present invention relates to an optical sensing system for compact optical sensing.

### BACKGROUND

Optical sensing systems are used for a variety of applications. Many of these systems are synchronous systems. Such systems are only able to detect light signals at certain time instance, meaning that any signals arriving away from these time instances are not detected. The solution for this problem is to check for light signals very often, which is energy consuming. Furthermore, many of these systems are bulky and complex.

There is need therefore for optical sensing systems that can detect light signals whenever they arrive e.g. asynchronous detection, without consuming a lot of energy, while at the same time being compact and simple.

The present invention aims to resolve in part the problems mentioned above.

### SUMMARY OF THE INVENTION

It is an object of embodiments of the present invention to provide a compact and reliable optical sensing system. The above objective is accomplished by a system and method according to the present invention.

In a first aspect, the present invention relates to an optical sensing system for optical sensing, comprising:
- at least one optical sensor, comprising a plurality of sensing units, preferably in a matrix configuration, wherein each of said sensing units is preferably a pixel sensor, wherein each sensing unit comprising a photo detector, wherein each photo detector is adapted to output a signal upon detection of a photon,
- optics able to produce an image of a scene on said optical sensor,
- a plurality of processing means, wherein each of said processing means is connected to at least one sensing unit corresponding thereto,
   wherein each of said processing means is adapted to receive at least one input corresponding to at least one output of the corresponding sensing unit,
   each of said processing means is adapted to integrate the output of the corresponding sensing unit to obtain a first integrated output, wherein said processing means is adapted to produce a first output signal when the first integrated output reaches at least a first predetermined value within a first predetermined time span.

For example, said processing means is adapted to produce said output signal when the total number of photons detected by the sensing unit reaches at least a predetermined number within said first predetermined time span.

It is an advantage of embodiments of the present invention that false detections are filtered. It is an advantage of embodiments of the present invention that noise such as ambient light is reduced or eliminated. It is an advantage of embodiments of the present invention that reliable detection is obtained.

It is an advantage of embodiments of the present invention that an asynchronous detection is obtained.

It is an advantage of embodiments of the present invention that a low power consumption and a simple system is obtained.

It is an advantage of embodiments of the present invention that processing sensing information is done by a processing structure with massively parallel input connection to each of the pixel sensors, for example implemented using a neural network, instead of a conventional processor with serialized data and instructions.

Preferred embodiments of the first aspect of the invention comprises one or a suitable combination of more than one of the following features.

The system preferably comprises at least one neighboring sensing unit neighboring to said sensing unit, wherein said system comprises at least one neighboring processing means neighboring to said processing means, wherein each sensing unit is connected to said at least one neighboring processing means corresponding to said at least one neighboring sensing unit. Preferably, each of said processing means is adapted to integrate the outputs of the corresponding sensing unit and the at least one neighboring sensing unit to obtain said first integrated output. It is an advantage of embodiments of the present invention that the processing is done in a parallel fashion, and therefore a fast and efficient processing is obtained. It is an advantage of embodiments of the present invention that a compact system is obtained due to the parallel connections.

It is an advantage of embodiments of the present invention that the pulses corresponding to different neighboring optical sensors are taken into account. It is an advantage of embodiments of the present invention that a more reliable detection is obtained, due to the detection confirmation by said neighboring optical sensors, and therefore filtering out false detections and ambient light.

The first integrated output preferably has a decay rate, wherein said decay rate is preferably tunable. It is an advantage of embodiments of the present invention that the decay rate determines the first predetermined time span in which a total number of pulses need to be received, in order to produce said output signal. It is an advantage of embodiments of the present invention that tuning the decay rate allows to control and reduce the power consumption in the system.

Each processing means comprises (or consists) preferably a first processing means connected in series to a second processing means, wherein the decay rate of the first processing means is faster than the decay rate of the second processing means.

The second processing means is preferably adapted to integrate the first output signal of the first processing means to obtain a second integrated output, wherein said second processing means is adapted to produce a second output signal when the second integrated output is at least a second predetermined value.

It is an advantage of embodiments of the present invention that the first processing means and the second processing means are two different filtering layers having two different filtering requirements.

Each processing means is preferably adapted to at least partially reset after producing its output signal. It is an advantage of embodiments of the present invention that the processing means can be used to receive and process a long train of pulses. It is an advantage of embodiments of the present invention that an asynchronous detection is obtained, since the processing means resets after producing said output signal, such that it is ready to receive a new set of pulses.

The system preferably comprises a switching element for each processing means, wherein the switching element is adapted to allow bypassing said processing means. It is an advantage of embodiments of the present invention that a choice between using the first processing means or the second processing means can be made depending on the detection conditions such as ambient light conditions.

Each processing means is preferably a neuron, preferably a leaky integrate and fire (LIF) neuron. It is an advantage of embodiments of the present invention that a compact system is obtained. It is an advantage of embodiments of the present invention that a simple and uncomplex system is obtained. It is an advantage of embodiments of the present invention that it is possible to tune the decay rate of the neuron.

The system preferably further comprises at least one light source and scanning means, wherein said scanning means is adapted to scan, preferably continuously, a light beam from said light source on said scene along a trajectory. It is an advantage of embodiments of the present invention that said light source allows triangulation and determining the depth profile of a field of view between the optical sensor and objects in the scene, wherein said light source and said optical sensors are asynchronous, i.e. the light generation is not synchronized with the detection.

The system preferably comprises at least two optical sensors. It is an advantage of embodiments of the present invention that triangulation is possible.

In a second aspect, the present invention relates to a method for optical sensing, comprising the steps of:
a- receiving a plurality of optical signals,
b- in parallel for each optical signal, integrating said signal to obtain a first integrated output,
c- producing a first output signal when the first integrated output is at least a first predetermined value within a first predetermined time span.

Preferred embodiments of the second aspect of the present invention comprises one or a suitable combination of more than one of the following features:
- the method preferably further comprises the step of decaying the integrated output over time, wherein the rate of said decay is preferably tunable,
- the method further comprises the steps of:
   d- in parallel for each first output signal, integrating said signal to obtain a second integrated output, and
   e- producing a second output signal when the second integrated output is at least a second predetermined value,
      wherein the rate of said decay in steps a to c is faster than in steps d to e,
- resetting the first integrated output after producing said first output signal, and resetting the second integrated output after producing said second output signal.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### DESCRIPTION OF THE FIGURES

The disclosure will be further illustrated by means of the following description and the appended figures.

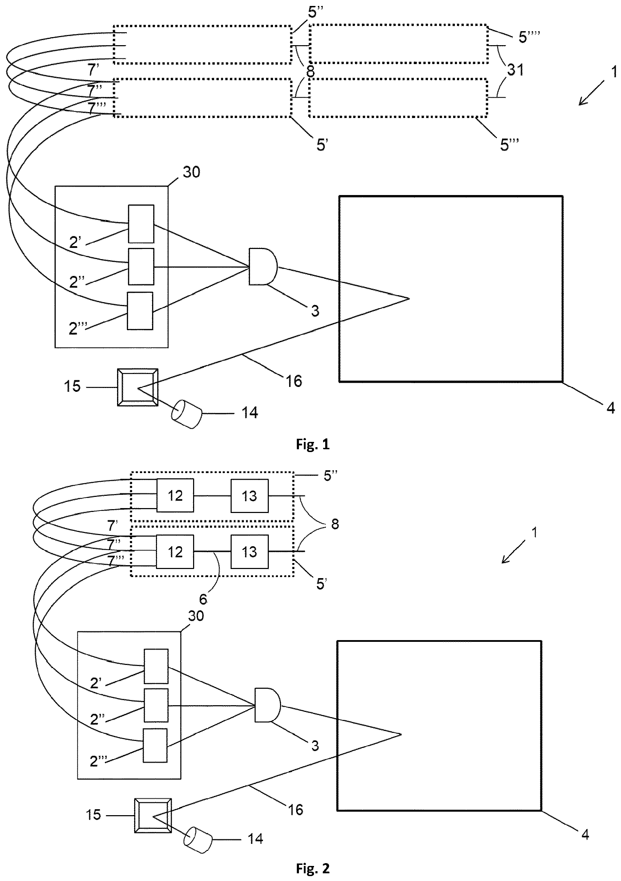

Figure 1 shows an optical sensing system (1) comprising a plurality of sensing units (2', 2", 2‴) and a plurality of processing means (5', 5", 5‴, 5ʺʺ), wherein each sensing unit (2', 2", 2"') is connected to a processing means (5', 5") corresponding thereto, wherein a first processing means (5', 5") and a second processing means (5‴, 5ʺʺ) are connected in series, according to embodiments of the present invention.
Figure 2 shows an optical sensing system (1) comprising a plurality of sensing units (2', 2", 2‴) and a plurality of processing means (5', 5"), wherein each sensing unit (2', 2", 2"') is connected to a processing means (5', 5") corresponding thereto, wherein the processing means (5', 5") comprises a first neuron (12) and a second neuron (13) connected in series, according to embodiments of the present invention.

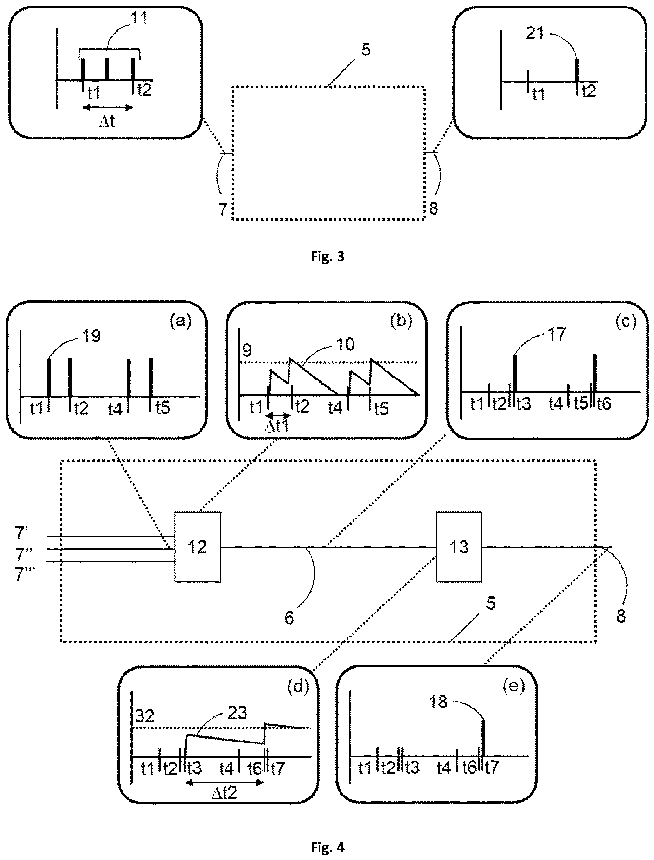

Figure 3 shows a processing means (5), wherein the processing means (5) is adapted to produce a pulse (21) when the total number of input pulses (7) to said processing means (5) is at least a predetermined number (11) within a predetermined time span (Δt), according to embodiments of the present invention.

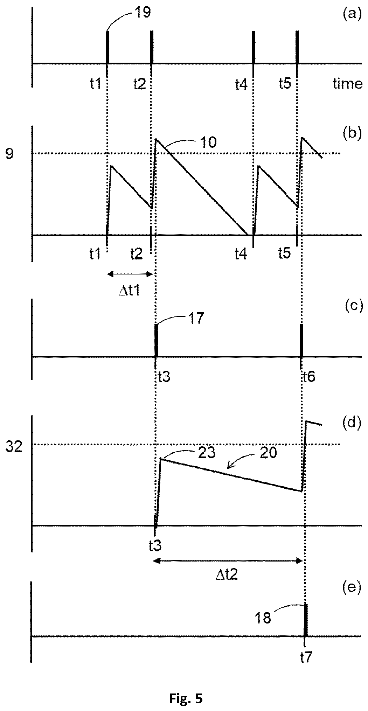

Figure 4 & 5 shows a processing means (5) comprising a first neuron (12) and a second neuron (13), wherein an example output (7") of a sensing unit (2") is shown in (a), the corresponding integrated output (10) by the first neuron (12) is shown in (b), the corresponding output (17) of the first neuron (12) is shown in (c), the corresponding integrated output (23) of the first neuron (12) by the second neuron (13) is shown in (d), and the corresponding output (18) of the second neuron (13) is shown in (e), according to embodiments of the present invention.

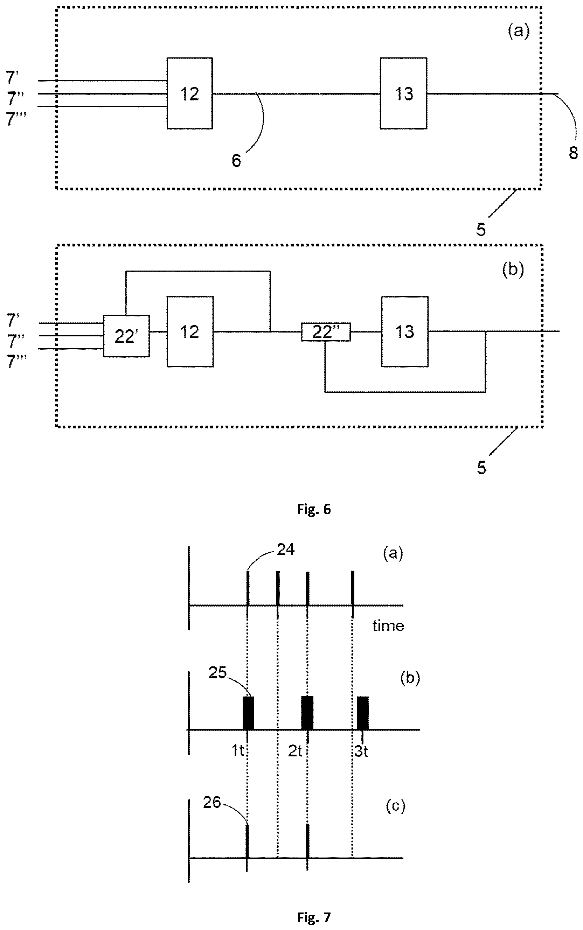

Figure 6 shows a processing means (5), wherein in (a) a first neuron (12) and a second neuron (13) are connected in series, and wherein in (b) a first switching means (22') and a second switching means (22") precede each of said first neuron (12) and second neuron (13), according to embodiments of the present invention.
Figure 7 shows an example of a synchronous detection, wherein an input of a train of pulses (24) is shown in (a), and observation windows (25) are shown in (b), and an output (26) is shown in (c), according to prior art.

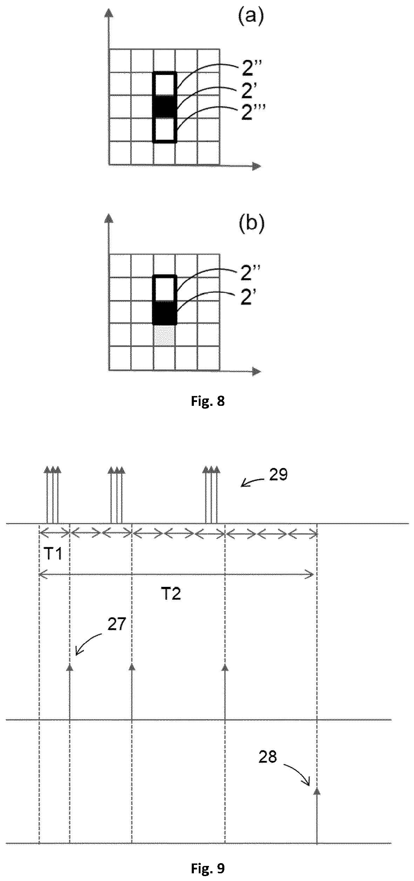

Figure 8 shows detections under strong ambient light conditions (a) and under weak ambient light conditions (b), according to embodiments of the present invention.
Figure 9 shows an example of the asynchronous detection, according to embodiments of the present invention.

Any reference signs in the claims shall not be construed as limiting the scope. In the different drawings, the same reference signs refer to the same or analogous elements.

### DETAILED DESCRIPTION

The present invention relates to an optical sensing system for optical sensing.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

In the description provided herein, numerous specific details are set forth. However, it is understood that embodiments of the invention may be practiced without these specific details. In other instances, well-known methods, structures and techniques have not been shown in detail in order not to obscure an understanding of this description.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings: "A", "an" and "the" as used herein refers to both singular and plural referents unless the context clearly dictates otherwise. By way of example, "a contaminant" refers to one or more than one contaminant.

The recitation of numerical ranges by endpoints includes all numbers and fractions subsumed within that range, as well as the recited endpoints.

In a first aspect, the present invention relates to an optical sensing system for optical sensing, preferably for compact optical sensing. The system comprises at least one optical sensor, comprising a plurality of sensing units, each of said sensing unit is preferably a pixel sensor. Each sensing unit comprises a photo detector. Preferably, said photo detector is a single photon detector, preferably a single photon avalanche detector. Alternatively, said photo detector is an avalanche photo detector. Each of said photo detector is adapted to output a signal upon detection of a photon. For example, upon detection of one photon or a predetermined number of photons, the photo detector outputs one signal (e.g. a pulse). The system further comprises optics able to produce an image of a scene on said optical sensor. The system further comprises a plurality of processing means, wherein each of said processing means is connected to at least one sensing unit corresponding thereto. For example, each sensing unit has a processing means corresponding thereto, wherein the sensing units are connected in parallel to the processing means corresponding thereto. Such parallel connection is advantageous for a few reasons, for example in allowing a fast, efficient, and compact system.

Each of said processing means is adapted to receive at least one input corresponding to at least one output of the corresponding sensing unit. For example, said processing means is connected to and receiving inputs from said sensing unit. The output of the sensing unit is e.g. a pulse or train of pulses corresponding to whether or not a photon is received by said sensing unit.

For example, an output signal is produced based on how fast e.g. pulses (e.g. corresponding to said photons) arrive to said processing means i.e. whether they arrive within a first predetermined time span. For example, said processing means is adapted to produce said output signal when the total number of photons detected by the sensing unit is at least a predetermined number within said first predetermined time span. For example, when the number of pulses is at least two pulses, preferably at least five pulses, more preferably at least ten pulses, within at most 10 nanoseconds, preferably at most 5 nanoseconds, more preferably at most 2 nanoseconds. In other words, if many pulses arrive within a shorter period of time, it is likely the detection is positive, and if only a few pulses arrive within said short period of time, it is likely the detection is false. This is advantageous in obtaining reliable detections and filtering out false detections. For example, in case there is ambient light, the chances that five pulses are received within 2 nanoseconds is low. This also allows asynchronous detection, since a pulse is received and an output signal is produced by said processing means at any time whenever a number of photons is detected within said first predetermined time span is satisfied.

Each of the processing means is adapted to integrate the output of the corresponding sensing unit to obtain a first integrated output, wherein said processing means is adapted to produce a first output signal when the first integrated output is (or reaches) at least a first predetermined value. This implies that the first integrated output is dynamically changing based on the output of the corresponding sensing unit, until it reaches the first predetermined value. As discussed above, the input and output signals to and from the processing means are digital signals, however the signals within the processing means may comprise analog signals. For example, in this case, the first integrated output signal is an analog signal, but is only used within the processing means and is not outputted by said processing means. In practice, integrating the output from one sensing unit would not allow the integrated output to reach the first predetermined value within the first predetermined time span, since the first predetermined time span is normally short. Therefore, in practice, outputs of more than one sensing unit e.g. neighboring sensing units, are connected to each processing means, to allow the first integrated output to reach the first predetermined value, as shown below. Ideally, the first integrated output decays with time, or resets at certain time instances (i.e. to allow reaching the first predetermined value only in the case that it is within said first predetermined time span), as shown below. That being said, the detection of said sensing unit is not limited to single photon detection. Furthermore, the skilled person understands that the number of photons can be calculated even when using sensing units comprising typical photo detectors that are not single photon detectors. For example, the total number of photons may be also the total number of detections, for example in case a certain number of detections is detected that is at least said predetermined number within said first predetermined time span.

Preferably, each sensing unit is adapted to produce a stream of pulses or digital signals (e.g. signals that are within at least 2 values e.g. '1's and '0'), for example whereby each pulse is the result of the detection of an impinging photon. The processing means is also preferably adapted to receive said stream of pulses or digital signals. For example, the input signals to the processing means and the output signals from the processing means are digital signals. This is advantageous in eliminating the need for analog to digital converters. However, processing the signals within the processing means may involve analog signals e.g. the analog signal in case the pulses are integrated in the processing means (as described below).

Preferably, each photo detector is arranged in a reverse biased configuration. Preferably, the detector is capable of detecting single photons impinging thereon. Preferably, the detector is adapted to output a logic signal e.g. an electrical detection signal upon detection of a photon. For example, a detection signal may be represented by a signal comprising logic '1' e.g. a detection, while no detection signal may be represented by a signal comprising logic '0' e.g. no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal.

Preferably, the system comprises at least one neighboring sensing unit neighboring to said sensing unit, wherein said system comprises at least one neighboring processing means neighboring to said processing means. Each sensing unit is connected to said at least one neighboring processing means corresponding to said at least one neighboring sensing unit. In other words, each processing means receives an output from the sensing unit corresponding thereto, and at least one, or preferably at least two or three, neighboring sensing units. Thereafter, the detection is based on more than one sensing unit e.g. a group of neighboring sensing units. This is advantageous in rendering the detection less likely to be false i.e. originating from photon streams uncorrelated in time and space such as ambient light, but rather a true detection i.e. from light actively projected on the scene producing a photon stream in a neighborhood of pixels which is correlated in time and space. For example, if within 2 nanoseconds, three neighboring sensing units each detect a photon, this detection is likely a true detection.

Preferably, each of said processing means is adapted to integrate the outputs of the at least one sensing unit and the at least one neighboring sensing unit to obtain said first integrated output, wherein said processing means is adapted to produce said first output signal, preferably a digital output signal, when the combined integrated output is at least said first predetermined value within said first predetermined time span. Having pulses from multiple sensing units e.g. neighboring or closely located sensing units within a very short period of time is less likely to be a false detection.

Preferably, the first integrated output has a decay rate, wherein said decay rate is preferably tunable. The decay rate determines the first predetermined time span and how fast the pulses must come after each other in order to produce said first output signal. For example, the first integrated output would keep decaying until enough pulses are received such that the first integrated output eventually reaches the first predetermined value. Therefore, there is a continuous monitoring of whether enough pulses arrive to reach the first predetermined value within a short period of time. The skilled person appreciates that determining that so many pulses were received in so much time can be implemented in other ways than having a decay rate, for example by resetting the first integrated output after a predetermined time span.

Tuning the decay rate allows to define the length of temporal window the processing means considers and to control the behavior of the system and for example adapt the system according to the optical power available. For example, let's assume that the optical system has a light source which is scanned along the different parts of the scene and is detected by the optical sensor (as discussed below). Having a slow decay rate (i.e. increasing the observation window) reduces the filtering capabilities of the processing means, however it allows to reduce the power consumption of the light source since a reduction of optical power will decrease the chance to detect a photon within a fixed observation window. Hence, setting a longer observation window (i.e. slower decay rates) allows to reduce the optical power at the expense of reduced filtering of uncorrelated photon detections.

Preferably, each processing means is a first processing means connected in series to a second processing means. For example, the output of the first processing means is input to the second processing means. In principle, the first and second processing means are similar, except that the decay rate in the first processing means is faster than the decay rate in the second processing means. This means that the first predetermined time span in which a total number of pulses need to be received is different in said first processing means than a second predetermined time span in said second processing means. This allows the two processing means to have different roles. For example, in case of a plurality of inputs to the first processing means, the first processing means ensures the coincidence condition (a spatial condition). For example, by projecting a dot using said light source on the scene and imposing a certain shape on the projected dot, we can constrain the pixel to only flag a valid detection when the imposed kernel corresponding to the expected dot shape in the pixel array was detected within a specified time. For example, a 2x1 kernel can be imposed, meaning that the projected dot must span at least 2x1 pixels. This is typically suited for elliptical dot shapes. When shooting optical pulses of length tp, the constraint imposed on the pixels will be that a cluster of 2x1 pixels must fire within tp in order to consider the detected photons to come from the active projection. Preferably, tp is in the order of 1 nanosecond.

In other words, this condition requires that the inputs of more than one sensing unit is positive within a predetermined time span before the processing means produces an output. In this case, for example, if only one input is positive, the integration output would not reach the predetermined value, as it needs at least one or two neighboring sensing units to have a positive input to the processing means.

The first predetermined value in the first processing means may be different from the predetermined value (referred to hereafter as the second predetermined value) in the second processing means, and independently tunable.

The second processing means has a different role, which is ensuring the persistence condition (a spatio-temporal condition). For example, by projecting a dot using a light source, we can impose that the trajectory of the dot is continuous, provided the pulse repetition frequency is higher than the dot displacement velocity. Let's assume a 1 nanosecond pulse repeated every 40 nanoseconds, a temporal window of 41 nanoseconds will be able to catch 2 pulses. By imposing that the pixel (or pixel cluster) must see at least 2 pulses in the 41 nanoseconds window we can filter out a significant portion of the detected ambient photons, since the ambient light photon statistics have a low chance to generate 2 consecutive detections in a 42 nanoseconds window.

For example, the second processing means is adapted to integrate the first output signal of the first processing means to obtain a second integrated output, wherein said second processing means is adapted to produce a second output signal when the second integrated output is at least said second predetermined value. For example, wherein the time it takes to reach the second predetermined value is a second predetermined time span longer than said first predetermined time span.

In other words, this condition (i.e. persistence) requires that the input to the second processing means comprises many pulses (consecutive or almost consecutive) within a period of time, which means that the input is persistence, which means that the input is likely true. For example, if out of 10 consecutive detections of a sensing unit, 9 detections are positive, then the detection is likely positive. The decay rate of the second processing means is longer because the second processing means needs to check or monitor the input over a longer period of time, while the decay rate of the first processing means is shorter because the first processing means needs to check or monitor the input (i.e. output of more than one sensing unit) within a short period of time. By applying a combination of both coincidence and persistence, a powerful filtering strategy is created which is quite efficient in terms of hardware implementation.

Preferably the processing means is adapted to associate a weight to the pulses of the sensing unit itself and each of the connected neighboring sensing units. For instance this can be achieved by providing unique pulse lengths to the pulses of each of the neighboring sensing units, the pulse length modulating the contribution of each of the pulses to the integrated signal. Another implementation may be to associate a unique charge to each of the pulse signals, this unique charge being added or subtracted to the integration signal upon presence of each pulse. In this way, by assigning different weights we can prioritize contributions from different types of neighbors. For example, one may give a lower weight to diagonal neighbors than to directly adjacent neighbors, with the goal of minimizing the chance that ambient or thermal detections contribute to true detections as if these were originating from active light.

Preferably, the processing means is adapted to at least partially reset after producing its output signal. For example, the processing means returns to its initial state after producing said output signal. For example, the value of the integrated output signal is reset. Preferably, the two processing means connected in series are reset at different values. For example, the integrated output signal in each processing means is reset to different values. For example, the first processing means is completely reset e.g. the first integrated output signal is completely reset e.g. to zero, while the second processing means is partially reset e.g. the second integrated output signal is partially reset e.g. reset to half its value. This is useful in case pulses arrive while the integrated output signal in the processing means is above threshold and did not decay yet. For example, in case a long train of pulses is detected, wherein the integrated output reaches the threshold or predetermined value quickly. In this case, the integrated output should be reset to zero to be able to process more pulses.

In this case, the first processing means resets fully because it requires multiple sensing units to detect pulses within a short period of time, in which case the first predetermined value is reached quickly. However, the second processing means resets partially because it requires one sensing unit to detect pulses over a longer period of time, in which case the second predetermined value is reached slowly. Fully resetting would mean that in case of a pulse train with repetition faster than the decay rate of the processing means, only 1 in 2 pulses will generate a pulse at the output of the processing means. A partial reset can avoid this and provide a continuous train of pulses at the output of the processing means, in which case only the very first pulse will not lead to a pulse at the output (see Figs. 4, 5, and 9).

Preferably, the system comprises a switching element for each processing means, wherein the switching element is adapted to allow bypassing said processing means. For example, the system is programmable such that one of said first processing means or second processing means is bypassed by said switching means. This allows to choose the processing means that is most suitable depending on the conditions, for example depending on ambient light conditions or depending on the active signal strength. For example, if the signal strength is too low, using the two processing means in series may not be preferable. As an example, in case of 2 sequential processing means, there are three scenarios: (1) the first processing means is ON and the second processing means is OFF, (2) the first processing means is OFF and the second processing means is ON, or (3) the first processing means is ON and the second processing means is ON.

For example, in cases where ambient light is negligible, it is advantageous to use only the second processing means (scenario 2), and therefore reduce the power consumption (i.e. of the first processing means) and increase the speed of processing. However, in cases where ambient light is significant, it is advantageous to use the first processing means (scenario 1) to additionally filter out noisy detections due to ambient light. Finally, in cases where very reliable detection is required, it is advantageous to use the first and second processing means (scenario 3), which allow two layer filtering and high detection reliability.

In another example, this may also depend on the bandwidth of the received signal, for example in case the bandwidth is very high, the first processing means (i.e. with the shorter time window) may be suitable to use, while for a low bandwidth, the second processing means (i.e. with the longer time window) may be suitable to use.

Preferably, each processing means is a neuron, preferably a leaky integrate and fire (LIF) neuron. All of the implementations discussed above in regards to the processing means are applicable in the case the processing means is a neuron. For example, the system preferably comprises a first neuron and a second neuron connected in series. The first neuron has at least two or at least three inputs, for example being the outputs of one sensing unit and one or two neighboring sensing units. The second neuron has one input wherein said input being the output of the first neuron. Also similarly to what was discussed above, the first neuron has inputs from the sensing unit and the neighboring sensing units, which allows coincidence detection - detection of photons in neighboring pixels within a certain time span - within a first time window, the first window being typically short and of the same magnitude as the optical pulses to be detected, while the second neuron allows persistence detection - repeated detection of photons or neuron firings in the same pixel during a certain second time span - within a second time window, the second time window being typically longer and preferably equal or slightly longer than the repetition time of the optical pulses . One or both of the neurons can be chosen to operate using the switching means, depending on the light conditions, enabling programmable filter behavior by operating the switches. The advantage of using neurons is that this architecture enables a very low power and compact implementation. Also similarly to the above, the neurons are adapted to integrate the at least one input thereto, wherein each neuron is adapted to produce an output signal, preferably a digital output signal or digital pulse, when the value of said integration is at least said predetermined value. In practice however, for the first neuron (i.e. the neuron performing coincidence detection), if pulses arrive from only one sensing unit, the pulses are integrated in said first neuron, but would be insufficient to reach the predetermined value. Therefore, in practice, outputs from multiple sensing units are necessary to integrate in order to reach the predetermined value. Similarly to the above, each neuron is adapted to at least partially reset after producing an output signal. In one implementation, the neuron resets itself after firing. In another implementation, the neuron resets partially (e.g. halfway). This avoids the case in which a pulse would come while the neuron is still above said predetermined or threshold value. The choice of the leaky integrate and fire neuron is suitable for this invention, since the neuron can integrate the output of the sensing unit to obtain an integrated output, wherein said integrated output leaks (i.e. decays) with time, and wherein the neuron can fire when the integrated output reaches a predetermined value.

In the configuration in which two neurons are connected in series, the first neuron preferably resets fully, since the first neuron has a faster decay rate i.e. a short time frame e.g. at most 10 nanosecond, preferably at most 5 nanoseconds, more preferably at most 2 or 1 nanosecond. In other words, the detection of the first neuron is almost instantaneous if a predetermined number of pulses arrive within said short time frame. For example, in case the sensing unit and one or two of its neighbors detect an impinging photon within a short time frame. On the other hand, the second neuron preferably resets partially, since the second neuron has a slower decay rate i.e. long time frame e.g. at least 10 nanoseconds, preferably at least 20 or at least 50 nanoseconds. The second neuron is not subject to ambient light, since ambient light is already filtered by the first neuron. Therefore, the second neuron has a long time frame, since it is responsible to detect whether detections are persistent i.e. whether detections are positive or '1' in at least M, preferably consecutive, observation windows over the past N observation windows, with M greater than 1 and at most equal to N. For example, whether in 10 consecutive time windows, the detection is positive in the majority or in all of them, for example in 9 or 8 time windows. The second neuron offers a second level of filtering in addition to the first level of the first neuron.

The reference in the invention to one or two processing means (or neurons) should not be understood to be limited to that. The skilled person appreciates that further layers of neurons can be used, for example to achieve further filtering. For example, a third neuron may be able to check whether a neighbor has fired within a certain time span in the past.

Preferably, the system further comprises at least one light source and scanning means, wherein said scanning means is adapted to scan, at least partially, a light beam from said light source on said scene along a trajectory. This is advantageous in allowing triangulation and determining the depth profile of a field of view. For example, said depth profile can be estimated by triangulating points of said at least one object in said scene detected by said optical sensor, with data of emitted light of said at least one light source. This is similar to triangulating output of two optical sensors, since the data of the emitted light of said light source is known i.e. it is known at which part of the scene the light would be illuminated at a certain time. An advantage of this invention is asynchronous detection as the light source and the optical sensors are asynchronous i.e. the light generation and detection is asynchronous. However, the light source and the optical sensors must be calibrated, for example such that the pattern and projection angle at each time stamp is known.

Preferably, the system comprises at least one optical sensor, wherein the distance is estimated by displacement on the sensor of optical signals corresponding to points of said at least one object in said scene detected by said optical sensor, the displacement being referred to the expected position based on prior knowledge on the light source, and/or the displacement being referred to the displacement of optical signal corresponding to points of said at least one object in said scene detected by at least one other optical sensor. This is advantageous in that it is simple to obtain a distance between each object and said sensors.

Scanning a light beam from said light source is advantageous in allowing triangulation. For example, using a system comprising a light source illuminating a light beam on a scene (e.g. an environment) and two of said optical sensors e.g. oriented differently to each other, wherein said two sensors (i.e. sensing units thereof) have a shared field of view of the scene, it is possible to convert x-y-time data of the two sensors (i.e. sensing units thereof) to x-y-z-time data by triangulation. For example, by adapting said light source to illuminate a light beam on said scene in an illumination trace, wherein said light source comprises means adapted to scan said light beam on said scene (preferably continuously), wherein said optical sensors monitor the light spot produced by said light beam and output locations of points of at least one object (e.g. points of surfaces of said object) in said scene along said trace at a plurality of instances, wherein the x-y-time data of the two optical sensors (i.e. sensing units thereof) can be converted to x-y-z-time data using triangulation. The light source may act for example as a reference point, such that said locations of said points of said object of the first optical sensor can be synchronized with those of the second optical sensor, to create the depth or z-dimension. The light source may be illuminating and scanning said light beam on a scene to be imaged in a Lissajous fashion or pattern, or raster scan, or the like. This illumination trajectory is advantageous in allowing efficient and fast image detection, since after several illumination cycles, a significant part of the image is already illuminated. Other illumination patterns may be envisaged.

Preferably, said scanning is continuous, such that objects in the scene are continuously scanned and identified. For example, the light source generates a light beam, which produce a light spot on an object, wherein said beam is continuously scanned on said scene along said trajectory, wherein for example after every some time, the beam would have scanned all or almost all of the scene. The reflected signal is then received by the at least one sensing unit. Scanning may be for example in a Lissajous pattern or a raster scan, or the like. The scanning means may for example be a MEMS scanner, or a mirror, or an optical phase array, or meta surface approach beam scanning, or the like.

For example, the light source is adapted to be in a wavelength detectable by the sensing units. For example, between 100 nanometer and 10 micrometer, preferably between 100 nanometer and 1 micrometer. For example, the optical sensor comprises a photo detector or a matrix of photo detectors that is able to detect photons impinging on each detector within a wavelength detection window falling within the range of 100 nanometer and 10 micrometer, preferably between 100 nanometer and 1 micrometer.

Preferably, said scanning is achieved by discrete steps in the scan angle, where typically the sensing sampling frequency of the sensor is faster than the step frequency of the scanner.

Preferably, the optical energy emitted along the scan trajectory is pulsed, meaning a scanning structure scans a beam across the scene in a discrete or continuous fashion, and the beam energy profile in time is pulsed, as an example the beam is a pulse train of 1 nanosecond pulses which are repeated every 40 nanoseconds. In this case the preferred time constants for the first processing means considering coincidence would be 1 nanosecond to 2 nanoseconds, while the time constant associated the second processing means would be 41-42 nanoseconds or a little longer.

Preferably, each optical sensor comprises a matrix of pixel sensors connected to a matrix of processing means. For example, the system comprises more than 100 pixel sensors, preferably more than 1,000 pixel sensors, more preferably more than 10,000 pixel sensors, even more preferably more than 100,000 pixel sensors, most preferably more than 1,000,000 pixel sensors. For example, the system may be arranged in a matrix fashion, wherein said optical sensor comprises 1,000 pixel sensor rows and 1,000 pixel sensor columns.

Preferably, the system comprises image representation means, for example a screen-like or other image representation devices, so as to reproduce locations of points of said objects in said scene.

Preferably, the optical system is used for 3D vision applications. For example, the system may be used to visualize objects in three dimensions. Alternatively, said sensor(s) may allow analyzing the scene, for example by extracting features of objects in the scene, without necessarily producing an image of said scene.

Preferably, the system further comprises a plurality of optical sensors (e.g. at least two optical sensors) and/or a plurality of light sources. This is advantageous in creating 3D vision and allowing triangulation (e.g. between one sensing unit of a first optical sensor, and one sensing unit of a second optical sensor) so as to obtain depth data. For example, each optical sensor may be oriented differently, such that a 3D perception of the scene to be imaged is captured, for example by triangulating the output of two such optical sensors.

In a second aspect, the present invention relates to a method for optical sensing. The method comprises the step of (a) receiving a plurality of optical signals, for example using the plurality of sensing units according to the first aspect.

The method further comprises the step of, (b) in parallel for each optical signal, integrating the signal to obtain a first integrated output. For example, associating a processing unit with each of the sensing units, wherein each processing unit integrates the optical signals input thereto to obtain said first integrated output. The method further comprises the step of (c) producing a first output signal when the first integrated output is at least a first predetermined value within a first predetermined time span.

Preferably, the method further comprises the step of adapting the plurality of sensing units to output a signal upon detection of a photon. Preferably, the method further comprises the step of decaying the integrated output over time, wherein the rate of said decay is preferably tunable.

Preferably, the method further comprises the steps of (d) in parallel for each first output signal, integrating said signal to obtain a second integrated output, and (e) producing a second output signal when the second integrated output is at least a second predetermined value, wherein the rate of said decay in steps a to c is faster than in steps (d) to (e).

Preferably, the method further comprises the step of resetting the first integrated output after producing said first output signal, and the step of resetting the second integrated output after producing said second output signal.

Any feature of the second aspect (method) may be as correspondingly described in the first aspect (system).

In a third aspect, the present invention relates to use of a system according to the first aspect and/or a method according to the second aspect, for optical sensing.

Further characteristics and advantages of embodiments of the present invention will be described with reference to the figures. It should be noted that the invention is not restricted to the specific embodiments shown in these figures or described in the examples, but is only limited by the claims.

Fig. 1 shows an optical sensing system (1) according to embodiments of the present invention, comprising an optical sensor (30) comprising a plurality of sensing units (2', 2", 2‴), the system (1) further comprises optics (3) able to produce an image of a scene (4) on said optical sensors (2', 2", 2‴). The optical sensing system (1) further comprises a light source (14) which illuminates a light beam (16) that produces a light spot or dot on a scene (4). The system (1) further comprises scanning means (15) adapted to scan said light beam (16) on said scene (4). For example, the scanning means (15) may be a reflector or a MEMS mirror or the like, which is able to scan the light beam (16) on the scene (4), for example on different parts of the scene (4). The light beam (16) is scanned along an illumination trajectory, for example in a Lissajous fashion. The reflected signal from the scene (4) is then captured by the sensing units (2', 2", 2").

The system (1) further comprises a plurality of processing means (5', 5", 5‴, 5ʺʺ), namely a first processing means (5', 5") that is adapted to receive the outputs (7', 7", 7‴) of the sensing units (2', 2", 2‴). The system (1) comprises at least one neighboring sensing units (2", 2‴) neighboring to said sensing unit (2'). Similarly, the system (1) comprises at least one neighboring processing means (5") neighboring to said processing means (5'). Each sensing unit (2', 2", 2"') is connected to a processing means (5', 5") corresponding thereto, and to the neighboring processing means (5") corresponding to the neighboring sensing units (2", 2"').

The output (7' 7", 7‴) of the sensing unit (2', 2", 2‴) is input to the first processing means (5', 5"). The first processing means (5', 5") is connected in series to a second processing means (5‴, 5ʺʺ), wherein the output of the first processing means (5', 5") is connected to the input of the second processing means (5‴, 5ʺʺ).

The output (7', 7", 7‴) of the sensing units (2', 2", 2‴), the output (8) of the first processing means (5', 5"), and the output of the second processing means (5"', 5"") are digital outputs e.g. trains of pulses. As shown, the first processing means (5', 5") is adapted to receive multiple inputs of multiple sensing units (2', 2", 2‴), for example the sensing unit (2') and at least one neighboring sensing unit (2", 2"').The second processing means (5‴, 5ʺʺ) is adapted to receive only one input, which is the output of the first processing means (5', 5").

The processing means (5') is shown in Fig. 1 to be out of the sensing unit (2'). However, the processing means (5') may also be part of the sensing unit (2'). In case the processing means (5') is a neuron, said neuron is preferably directly connected to the sensing unit (2').

Fig. 2 shows an optical sensing system (1) according to embodiments of the present invention, comprising a plurality of sensing units (2', 2", 2‴) and a plurality of processing means (5', 5"), wherein each sensing unit (2', 2", 2‴) is connected to a processing means (5', 5") corresponding thereto in a parallel fashion. The processing means (5', 5") comprises a first neuron (12) and a second neuron (13) connected in series. Similarly to Fig. 1, the output (6) of the first neuron (12) is input to the second neuron (13). The inputs (7', 7", 7‴) and outputs (6, 8) of each neuron (12, 13) are digital e.g. pulses. For example, a stream of photons is incident on the sensing units (2', 2", 2"'), which output a train of pulses accordingly. In Fig. 2, the first neuron (12) is acting as the first processing means (5', 5") in Fig. 1, while the second neuron (13) is acting as the second processing means (5"', 5"") in Fig. 1.

Fig. 3 shows a processing means (5) according to embodiments of the present invention, wherein the input (7) to the processing means (5) is a stream of pulses. The processing means (5) is adapted to produce a pulse (21) at the output (8) of the processing means (5) when the total number of pulses (11) is at least a predetermined number (11) within a predetermined time span (Δt). In this figure, the total number of pulses (11) is shown to be from one input (7) only. However, in practice, the total number of pulses (11) preferably takes into account multiple inputs. This allows to filter out ambient light or false detections, since it is more difficult to get a total number of X false detection from sensing units and their neighboring sensing units within a time span of Y. For example, in case there are three inputs to said processing means (5) corresponding to three sensing units (2', 2", 2‴) neighboring to one another, and in case a total number of 9 pulses need to arrive within 2 nanoseconds to allow producing an output pulse (21) by said processing means, then around three pulses per sensing unit (2', 2", 2‴) need to arrive within 2 nanoseconds. This is a very effective way of reducing false detections and obtain reliable detections.

Fig. 4 shows an example of a processing means (5) comprising a first neuron (12) and a second neuron (13), according to embodiments of the present invention. An example of an output (7") of a sensing unit (2") is shown in (a), wherein said output (7") is a train of pulses (19) corresponding to events of said sensing unit (2"). These pulses (19) are input to the first neuron (12). Similar pulses of neighboring sensing units (2', 2‴) are also output (7', 7‴) by said neighboring sensing units (2', 2‴) and input in the first neuron (12). The first neuron (12) is adapted to integrate the inputs (7', 7", 7‴) thereto, as shown in (b). For example, at a first time instance (t1), a pulse is received, and the integrated output (10) jumps in value. The integrated output (10) in the first neuron (12) decays by a decay rate. At a second time instance (t2), another pulse is received, and the integrated output (10) jumps again to a value higher than a threshold value (9) or said first predetermined value. Due to the integrated output (10) crossing the limit of the threshold value (9) (within a first predetermined time span(Δt)), an output pulse (17) is produced by said first neuron (12) at a third time instance (t3), as shown in (c). This occurs again in a fourth time instance (t4) and fifth time instance (t5), producing another output pulse at a sixth time instance (t6).

The integrated output (10) is not only a result of integrating the output (7") of one sensing unit (2"), but is also the result of integrating the output (7', 7‴) of the neighboring sensing units (2', 2‴). Therefore, in case the pulses are only coming from one sensing unit (2"), and is therefore likely to be a result of a false detection, the integrated output (10) of said one sensing unit (2") would not be high enough to reach the threshold value (9). Therefore, outputs (7', 7", 7‴) of one sensing unit (2") as well as its neighboring sensing units (2', 2‴) are needed to reach the threshold value (9), to guarantee reliable detections and filter out false detections.

The output (6) of the first neuron (12) comprising the pulses (17) is input to the second neuron (13). Unlike the first neuron (12), the second neuron (13) has only one input (6). The second neuron (13) is also adapted to integrate the input (6) thereto. However, the integrated output (23) decays by a different decay rate than in the first neuron (12). This is shown in (d), wherein the decay rate of the integrated output (23) in the second neuron (13) is slower than the decay rate of the first integrated output (10) in the first neuron (12). Having a slower decay rate allows to know whether the detection is a persistent detection. For example, the first neuron (12) allows to detect reliable detections and filter out false detections, by depending on the detections of neighboring sensing units, or what we refer to as coincidence detection. On the other hand, the second neuron (12) allows to detect persistent detections, for example detections that are happening persistently within a period of time (here, the second predetermined time span (Δt2)), or what we refer to as persistence detection. Since the pulses (17) at the input of the second neuron (13) are persistent, and since the second integrated output (23) in the second neuron (13) reached the threshold value (9), a pulse (18) is produced by said second neuron (13) at a seventh time instance (t7), as shown in (e). For a better understanding, Fig. 5 (a-e) show a similar situation as in Fig. 4 (a-e) in a vertical view.

Fig. 6 shows a processing means (5) wherein in (a) a first neuron (12) and a second neuron (13) are connected in series. Another advantageous implementation is shown in (b), wherein a switching means (22', 22") precedes each of said first neuron (12) and second neuron (13). For example, a first switching means (22') precedes the first neuron (12), and the second switching means (22") precedes the second neuron (13). Each switching means (22', 22") allows to bypass the neuron (12, 13) corresponding thereto. For example, the first switching means (22') allows to bypass the first neuron (12), wherein the output (7') of the sensing unit (2') is immediately input into the second neuron (13). Similarly, the second switching means (22") allows to bypass the second neuron (13), wherein the output of the first neuron (12) becomes the output of the processing means (5). Only one switching mean) (22', 22") may operate at a time (or none at all), otherwise the processing means (5) would not be able to process any inputs and produce any useful outputs.

The switching means (22', 22") are advantageous in case only one neuron is necessary to perform the operation. For example, in case the ambient light or noise is very low, the first neuron (12) may be bypassed without compromising the reliability of the system. Similarly, it is advantageous to bypass the second neuron (13) in case the output of the first neuron does not require further filtering. Bypassing the neurons (12, 13) may also be advantageous for example in reducing the power consumption and increasing the processing speed.

Fig. 7 shows an example of a synchronous detection that is common in prior art. The example assumes an input of a train of pulses (24) to a system, as shown in (a), and observation windows (25) spaced by constant periods (t) as shown in (b). Since the observation windows (25) only cover certain time instances, any pulses out of said observations windows (25) are not detected. For example, since only two pulses (24) are coinciding with two observation windows (25), the output (26) comprises only said two pulses, while other two pulses are not detected.

In this invention, however, an asynchronous detection is obtained, which overcomes the disadvantage of the synchronous detection.

Fig. 8 shows detection cases under different ambient light conditions, according to embodiments of the present invention. In (a), the detection is under strong ambient light conditions. Therefore, the use of a sensing unit (2') as well as two neighboring sensing units (2", 2‴) is desired. The outputs of said sensing unit (2') and two neighboring sensing units (2", 2‴) is fed into the first neuron (12) or the first processing system (5'). However, in (b), the detection is under weak ambient light conditions. Therefore, one sensing unit (2') as well as one neighboring sensing unit (2") is sufficient. The output of said one sensing unit (2') and one neighboring sensing unit (2") is input in the first neuron (12) or the first processing means (5'). An implementation to allow switching between (a) and (b) can be obtained by using the switching elements (22', 22"), wherein under strong ambient light conditions, the first switching element (22') is not activated, and the first neuron (12) processes the input thereto. However, under weak ambient light conditions, the first switching element (22') is activated, the first neuron (12) is bypassed, and the input is directly fed into the second neuron (13). Other configurations may be envisaged based on other conditions such as active light strength, bandwidth, and so on.

Fig. 9 shows an example of an asynchronous detection, according to embodiments of the present invention. Each time pulses (29) of different sensing units are received at the first time window (T1 e.g. 1 nanosecond), and the integrated output overcomes the predetermined value of said processing means (i.e. the number of pulses is more than a predetermined number), a pulse (27) is produced by the first processing means. After this, a second time window (T2 e.g. 20 nanoseconds) is present, which relates to the second processing means, wherein the second time window (T2) is much longer. The first processing means (5', 5") is connected to the second processing means (5‴, 5""). Each time pulses of the first processing means are received at the second time window (T2), and the integrated output overcomes the predetermined value of said processing means (i.e. the number of pulses is more than a predetermined number), a pulse (28) is produced by the second processing means.

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

**LIST OF REFERENCE SIGNS**

| | | | | | |
|---|---|---|---|---|---|
| **1** | Optical sensing system | | | | |
| **2', 2", 2‴** | Sensing unit and neighboring sensing units | | | | |
| **3** | Optics | | | | |
| **4** | Scene | | | | |
| **5', 5"** | Processing means / first processing means | | **5‴, 5""** | **Second processing means** | |
| **6** | Output signal of the (first) processing means / output signal of the first neuron | | | | |
| **7** | Output signal of the optical sensor | | | | |
| **8** | Output signal of the (first) processing means / output signal of the second neuron | | | | |
| **9** | First predetermined value | | | | |
| **10** | The first integrated output of the optical sensor | | | | |
| **11** | The number of pulses of the optical sensor within a predetermined time | | | | |
| **12** | First neuron | | **13** | Second neuron | |
| **14** | Light source | | | | |
| **15** | Scanning means | | | | |
| **16** | Light beam | | | | |
| **17** | Digital output signal of the first neuron | | | | |
| **18** | Digital output signal of the second neuron | | | | |
| **19** | Digital input signals to the processing means / Digital output signals of the optical sensor | | | | |
| **20** | Decay rate of the neuron | | | | |
| **21** | Digital output signal of the processing means | | | | |
| **22** | Switching element | | | | |
| **23** | The second integrated output of the first neuron | | | | |
| **24** | Input train of pulses to a synchronous detection system | | | | |
| **25** | Observation window | | | | |
| **26** | Output of a synchronous detection system | | | | |
| **27** | Output of the first neuron or processing means | | | | |
| **28** | Output of the second neuron or processing means | | | | |
| **29** | Pulses of different sensing units | **30** | Optical sensor | | |
| **t1** | First time instance | **t2** | Second time instance | **t3** | Third time instance |
| **t4** | Fourth time instance | **t5** | Fifth time instance | **t6** | Sixth time instance |
| **t7** | Seventh time instance | | | | |
| **31** | Second output signal / output signal of the second processing means | | | | |
| **32** | Second predetermined value | | | | |

## Claims

1. An optical sensing system (1) for optical sensing, comprising:
- at least one optical sensor (30) comprising a plurality of sensing units (2'), preferably in a matrix configuration, wherein each of said sensing units (2') is preferably a pixel sensor (2'), wherein each sensing unit (2') comprising a photo detector, wherein each photo detector is adapted to output a signal upon detection of a photon,
- optics (3) able to produce an image of a scene (4) on said optical sensor (30),
- a plurality of processing means (5), wherein each of said processing means (5') is connected to at least one sensing unit (2') corresponding thereto,
wherein each of said processing means (5') is adapted to receive at least one input corresponding to at least one output (7') of the corresponding sensing unit (2'),
**characterized in that**
each of said processing means (5', 5") is adapted to integrate the output (7', 7", 7‴) of the corresponding sensing unit (2', 2", 2‴) to obtain a first integrated output (10), wherein said processing means (5', 5") is adapted to produce a first output signal (8) when the first integrated output (10) reaches at least a first predetermined value (9) within a first predetermined time span (Δt).

2. An optical sensing system (1) according to claim 1, wherein said system (1) comprises at least one neighboring sensing unit (2", 2‴) neighboring to said sensing unit (2'), wherein said system (1) comprises at least one neighboring processing means (5") neighboring to said processing means (5') wherein each sensing unit (2') is connected to said at least one neighboring processing means (5") corresponding to said at least one neighboring sensing unit (2", 2"').

3. An optical sensing system (1) according to claim 2, wherein each of said processing means (5', 5") is adapted to integrate the outputs (7', 7", 7‴) of the corresponding sensing unit (2', 2", 2‴) and the at least one neighboring sensing unit (2", 2‴) to obtain said first integrated output (10).

4. An optical sensing system (1) according to any of the previous claims, wherein the first integrated output (10) has a decay rate (20), wherein said decay rate (20) is preferably tunable.

5. An optical sensing system (1) according to claim 4, wherein each processing means (5', 5") is a first processing means (5', 5") connected in series to a second processing means (5‴, 5ʺʺ), wherein the decay rate of the first processing means (5', 5") is faster than the decay rate of the second processing means (5"', 5ʺʺ).

6. An optical sensing system (1) according to any of claims 5, wherein the second processing means (5‴, 5ʺʺ) is adapted to integrate the first output signal (8) of the first processing means (5', 5",) to obtain a second integrated output (23), wherein said second processing means (5‴, 5ʺʺ) is adapted to produce a second output signal (31) when the second integrated output (23) is at least a second predetermined value (32).

7. An optical sensing system (1) according to any of the previous claims, wherein each processing means (5', 5", 5‴, 5ʺʺ) is adapted to at least partially reset after producing said its output signal (8, 31).

8. An optical sensing system (1) according to any of the previous claims, wherein the system (1) comprises a switching element (22', 22") for each processing means (5', 5", 5‴, 5‴‴), wherein the switching element (22', 22") is adapted to allow bypassing said processing means (5', 5", 5‴, 5ʺʺ).

9. An optical sensing system (1) according to any of the previous claims, wherein each processing means (5', 5", 5‴, 5ʺʺ) is a neuron (12, 13), preferably a leaky integrate and fire LIF neuron.

10. An optical sensing system (1) according to any of the previous claims, wherein the system (1) further comprises at least one light source (14) and scanning means (15), wherein said scanning means (15) is adapted to scan, preferably continuously, a light beam (16) from said light source (14) on said scene (4) along a trajectory, wherein said light source (14) and said optical sensor (30) are asynchronous.

11. An optical sensing system (1) according to any of the previous claims, wherein the system (1) comprises at least two optical sensors (30), wherein the system (1) is adapted to triangulate data of sensing units (2) of one optical sensor (30) with data of sensing units (30) of another optical sensor (30).

12. A method for optical sensing, comprising the steps of:
a- receiving a plurality of optical signals (7'),
b- in parallel for each optical signal, integrating said signal (7') to obtain a first integrated output (10), and
c- producing a first output signal (8) when the first integrated output (10) is at least a first predetermined value (9) within a first predetermined time span (Δt).

13. A method according to claim 12, wherein the method further comprises the step of decaying the first integrated output (10) over time, wherein the rate of said decay is preferably tunable.

14. A method according to claims 13, wherein the method further comprises the steps of:
d- in parallel for each first output signal (8), integrating said signal (8) to obtain a second integrated output (23), and
e- producing a second output signal (31) when the second integrated output (23) is at least a second predetermined value (32),
wherein the rate of said decay in steps a to c is faster than in steps d to e.

15. A method according to any of claims 12 to 13, or claim 14, wherein the method further comprises the step of resetting the first integrated output (10) after producing said first output signal (8), or the step of resetting the second integrated output (23) after producing said second output signal (31).
